# EUROPEAN PATENT APPLICATION

(11) **EP 4 230 560 A1**
(43) Date of publication of application: **23.08.2023**
(21) Application number: 21951108.6
(22) Date of filing: 06.12.2021
(51) Int. Cl.: B65H 37/00

(54) **LAMINATION METHOD AND LAMINATION DEVICE**

(71) Applicant: Nippi Corporation, Yokohama-shi, Kanagawa 236-8540 (JP)
(72) Inventor: YOSHIZAKI Risa, Yokohama-shi Kanagawa 2368540 (JP); TAKATSU Takehito, Yokohama-shi Kanagawa 2368540 (JP); ASANO Ryoichi, Yokohama-shi Kanagawa 2368540 (JP)
(74) Representative: Vossius & Partner Patentanwälte Rechtsanwälte mbB
(86) International application number: PCT/JP2021/044637
(87) International publication number: WO 2023/105555

(57) **Abstract**

To provide a technique for automatizing a lamination work of a woven prepreg material. A lamination order is decided. A plurality of piece parts 10 is cut out from a prepreg base material. In accordance with the order, the cut-out piece parts 10 are placed on a belt-like shaped base sheet 20. The base sheet 20 having the piece parts 10 placed thereon is wound into a roll shape. The roll-like shaped base sheet 20 is set to a feeding reel 31 and a winding reel 32. The base sheet 20 is fed from the feeding reel 31 to be wound by the winding reel 32. A compaction roller 33, in association with the operations of the reels and in accordance with the order, causes the piece parts 10 to be pressure-bonded against a jig 40 or a laminated body (in the middle of formation) to transfer the piece pats 10 from the base sheet 20. Repetition of the above operations enables lamination of the prepreg materials and achieves formation of a targeted laminated body 50 (final product).

## Description

### [TECHNICAL FIELD]

The present invention relates to a technique for forming a fiber reinforced plastic (FRP), more specifically, relates to a technique for automatically laminating prepreg sheets.

### [BACKGROUND ART]

The formation of the fiber reinforced plastic (FRP) includes a lamination step, a shaping step, and a curing step.

A prepreg is a composite material which is formed in such a manner that a reinforcing material, e.g., a carbon fiber, is impregnated with an uncured thermosetting resin. The prepreg is formed into a sheet shape. A plurality of prepreg sheets is laminated to form a laminated body.

Conventionally, the plurality of prepreg sheets is laminated by a manual operation of a worker. Nowadays, automatization of the laminating work is desired. As one of techniques for the automatic laminations, an ATL (Automatic Tape Lay-Up) method is proposed (e.g., Patent Literature 1).

In the ATL method, the prepreg is formed into a tape shape having an appropriate width, e.g., about a width from 76 mm to 305 mm, the tape is cut to an arbitrary length, and, while the cut tapes are sequentially laminated on a shaping jig and are heated as required, the laminated tapes are pressurized and brought into intimate contact with each other by using a compaction roller to form a laminated body. In the ATL method, a unidirectional fiber (UD) prepreg is employed.

Here, the unidirectional prepreg material hardly stretches. When attempting to form a curved surface of, for example, an aircraft and a rocket, the unidirectional prepreg material hardly fits for a curved surface, resulting in inviting an easy occurrence of wrinkles. When attempting to force the unidirectional prepreg material to follow a shape of the curved surface, the unidirectional prepreg material may be torn in a direction perpendicular to the fibers. Therefore, care is required for such possible inconvenience when forming a laminated body having a complicated shape including a curved surface (e.g., a three-dimensional curved surface).

There is a method alike the ATL method. It is an AFP (Automated Fiber Placement) method. In the AFP method, a prepreg tape having a width narrower than the prepreg tape employed in the ATL method is employed. This enables an easy fit for any complicated shapes including a curved surface. To the contrary, because of the narrow tape width, a working speed is inferior to that of the ATL method.

### [CITATION LIST]

### [PATENT LITERATURE]

[PATENT LITERATURE 1] JP 2014-125285A

### [SUMMARRY OF INVENTION]

### [TECHNICAL PROBLEM]

On the contrary, there is a case where a woven prepreg material is employed. The woven prepreg material is easy to stretch in a plurality of directions when it is compared with the unidirectional prepreg material and thus is easy to fit for any complicated shapes including a curved surface.

When the woven prepreg material is formed into a continuous shape, there is generated useless parts. Therefore, the continuously formed woven prepreg material is not employed in practice. As a result, the continuously formed woven prepreg material is hardly employed in the ATL method. In other words, as usual, the operation still much relies on the manual operation by the worker. For this reason, the automatization of lamination of the woven prepreg materials is desired.

The invention of the present application is made to solve the above-described problem. A purpose of the present invention is to provide a technique for automatizing the lamination of the woven prepreg materials.

### [SOLUTION TO PROBLEM]

The present invention was made to solve the above-described problem. The present invention is directed to a method for laminating prepreg materials which are made by impregnating fibers with an uncured resin. The method includes a step of deciding a lamination order for laminating a plurality of piece parts made of prepreg material; a step of cutting out the piece parts from a prepreg base material made of the prepreg material; a step of placing the cut-out piece parts on a belt-like shaped base sheet in accordance with the order; a step of winding the base sheet having the piece parts placed thereon into a roll-like shape; a step of setting the roll-like shaped base sheet to a feeding reel and setting an end part of the roll-like shaped base sheet to a winding reel; a step of feeding the base sheet from the feeding reel to wind the base sheet by the winding reel; and a step of pressure-bonding the piece parts against a jig or a laminated body in accordance with the order by using a compaction roller to transfer the piece parts from the base sheet.

Automatization of the laminating work can be achieved by the above-described steps.

In the above-described invention, preferably, a tensile force of the base sheet is adjusted for each of the piece parts when the piece parts are pressure-bonded against the jig or the laminated body in accordance with the order by using the compaction roller.

Accordingly, occurrence of displacement and/or wrinkles can be suppressed. The base sheet also can be fit for any complicated shapes including a curved surface.

In the above-described invention, preferably, fibers of the prepreg material have a woven fabric shape.

The invention of the present application is applicable to also a woven prepreg material which conventionally is hard to be subjected to an automatic lamination process.

In the above-described invention, the plurality of piece parts includes piece parts having different sizes or/and different shapes.

Accordingly, lamination can be realized without any waste of material. In a case of including the piece parts having different sizes or/and different shapes, a tensile force of the base sheet also differs corresponding to each of the piece parts. This may invite a possible cause of inconvenience. An optimum tensile force, however, can be kept by the adjustment of the tensile force.

In the above-described invention, the jig has a curved surface.

The invention of the present application can be applied to any complex shapes including, but not limited to, a curved surface. The invention, as a matter of course, may be applied to a flat surface.

In the above-described invention, the base sheet has a front surface having the piece parts placed thereon and a back surface which is a reverse side of the front surface, wherein the back surface has better releasability than the front surface.

With the above-described structure, an expansion of the roll-like shaped base sheet can be smoothly done upon the pressure-bond/transfer step as well as a positioning accuracy upon the pressure-bond/transfer step can be assured.

The present invention was made to solve the above-described problem. The invention is directed to a lamination device for laminating prepreg materials which are made by impregnating fibers with an uncured resin. The invention includes a feeding reel for feeding a roll-like shaped base sheet; a winding reel for winding the fed base sheet; and a compaction roller for pressure-bonding a plurality of piece parts, each being cut out from a prepreg base material and given an order to be placed on the base sheet in accordance with the order, against a jig or a laminated body to transfer the piece parts from the base sheet.

With the above-described structure, automatization of the laminating work can be achieved.

The above-described invention preferably includes a tensile force adjusting means for adjusting a tensile force of the base sheet for each of the piece parts when the piece parts are pressure-bonded against the jig or the laminated body in accordance with the order by the compaction roller.

Accordingly, occurrence of displacement and/or wrinkles can be suppressed. The base sheet can be fit for any complicated shapes including a curved surface as well.

### [ADVANTAGEOUS EFFECT OF INVENTION]

The present invention can achieve automatization of the laminating work for laminating woven prepreg materials. As a result, a laminated body of a complicated shape including a curved surface can be formed with ease.

### [BRIEF DESCRIPTION OF DRAWINGS]

FIG. 1 schematically illustrates steps.
FIG. 2 shows comparison between a woven prepreg material (suitable example) and a unidirectional prepreg material (reference example).
FIG. 3 illustrates images of a cutting step and a placing step.
FIG. 4 illustrates an image of placing piece parts.
FIG. 5 illustrates an image of a roll form winding step.
FIG. 6 illustrates an image of cross sections of roll-like shaped base sheets.
FIG. 7 illustrates images of roll-like shaped base sheet setting steps.
FIG. 8 illustrates an image of a pressure-bond/transfer step.
FIG. 9 illustrates images of the pressure-bond/transfer step.
FIG. 10 illustrates an image of a laminated body.

### [Description of Embodiments]

### -Basic Steps and Basic Structures-

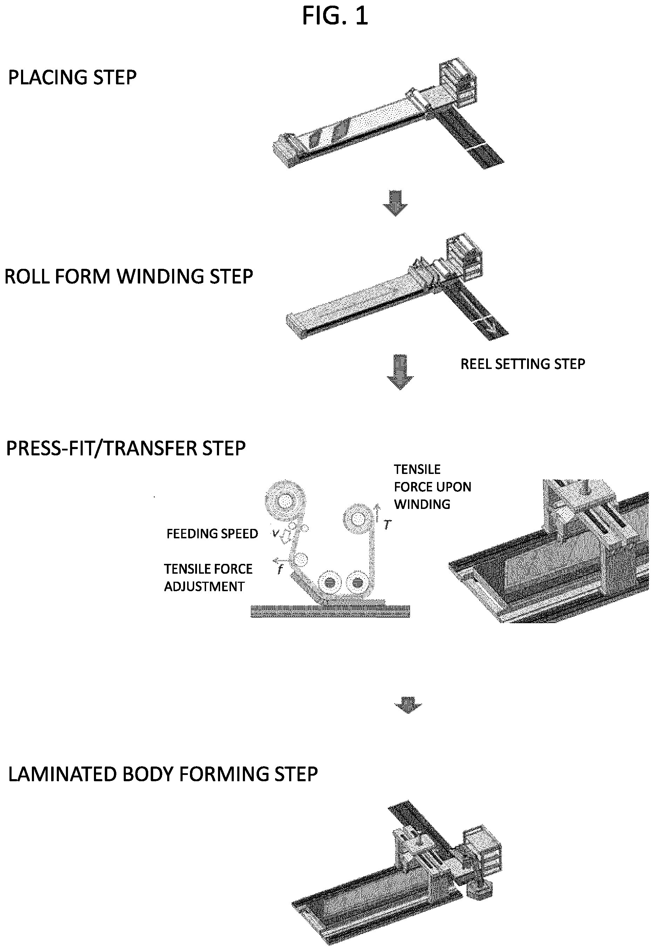

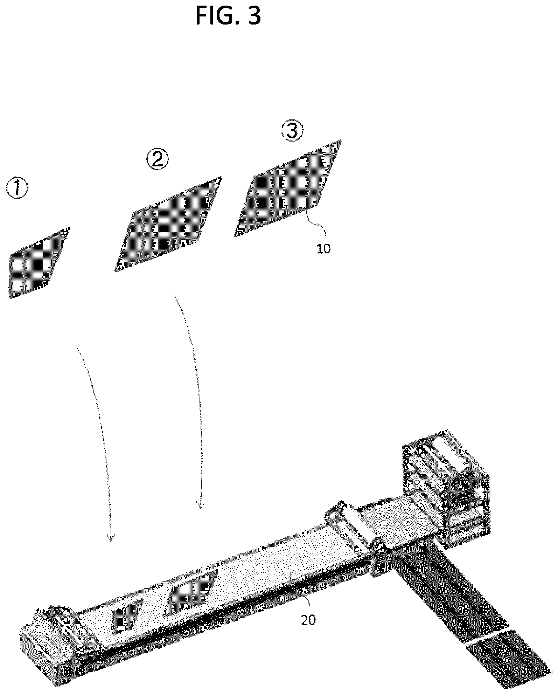

FIG. 1 schematically illustrates steps of a lamination method according to the present invention. Each step will be described below in detail with reference to FIG. 3 to FIG. 9.

Firstly, a lamination order is decided (order deciding step; not shown). A plurality of piece parts 10 are cut out from a prepreg base material (cutting step; not shown). In accordance with the order, the cut-out piece parts 10 are placed on a belt-like shaped base sheet 20 (piece parts placing step). The base sheet 20 having piece parts 10 placed thereon is wound into a roll shape (roll form winding step). The roll-like shaped base sheet 20 is set to a feeding reel 31and a winding reel 32 (reel setting step; not shown). The base sheet 20 is fed from the feeding reel 31 to be wound by the winding reel 32. According to the operations of the reels and in accordance with the order, a compaction roller 33 causes the piece parts 10 to be pressure-bonded against a jig 40 or a laminated body (in the middle of formation), resulting in transferring the piece parts 10 from the base sheet 20 (pressure-bond/transfer step). Repetition of the above operations enables lamination of the prepreg materials and formation of a targeted laminated body 50 (final product) (laminated body forming step).

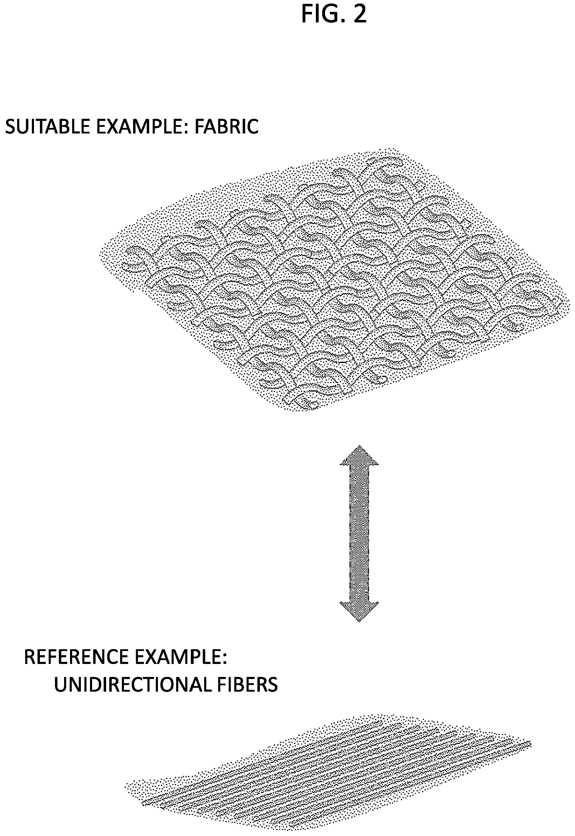

FIG. 2 schematically illustrates prepreg materials. As a suitable example, there is a case where a woven prepreg material is employed. The woven prepreg material is easy stretchable in a plurality of directions in comparison with a unidirectional prepreg material. Thus, the woven prepreg material readily fits for any complicated shapes including a curved surface.

As a reference example, the unidirectional prepreg material is shown. The invention of the present application does not actively exclude the unidirectional prepreg material but may be applied to the lamination of the unidirectional prepreg materials. Here, the conventional ATL method can be used in the lamination of the unidirectional prepreg materials.

Firstly, an order deciding step will be described below. To form a laminated body, a plurality of prepreg sheets (piece parts) are laminated in a surface direction and in a laminating direction, thereby forming a laminated body. In a designing stage, a shape, a size, a placing position, and a placing order are decided for each of the piece parts 10. For example, each of the piece parts is given an identifier.

FIG. 3 illustrates an image of the placing step. In accordance with the order, the plurality of piece parts 10 are cut out from the prepreg base material. It is not necessary to particularly define the order upon cutting but the cutting may be performed in accordance with the order. Here, the wording of "in accordance with the order" means "being cut in an ascending order", i.e., No. 1 → No. 2 →No. 3 → .... No. 9 → No. 10 corresponding to the decided order, i.e., No. 1 → No. 2 →No. 3 → .... No. 9 → No. 10. Alternatively, it may mean "being cut in a descending order, i.e., No. 10 → No. 9 .... No. 3 → No. 2 →No. 1. In so far as the identifier of each of the piece parts is known, the order can be exceptionally changed, e.g., No. 1 → No. 2 →No. 4 → No. 3 ...., considering the convenience in construction.

Each of the piece parts 10 has a different shape and/or a different size so that it fits to be placed at its placing position. As a matter of course, there is a case where some of the piece parts 10 have the same shapes and/or the sizes.

Further, in accordance with the order, the cut-out piece parts 10 are placed on the belt-like shaped base sheet 20. The wording of "in accordance with the order" includes the ascending order, the descending order, and the exceptional change of the order. It is material to grasp at which position each of the piece parts is to be placed.

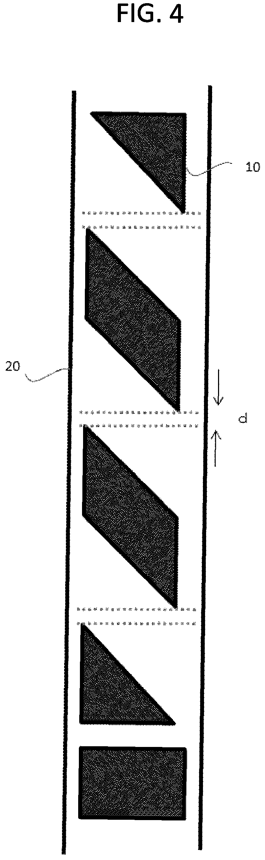

FIG. 4 is an image illustrating placing of the piece parts. It is not essential to put a space between the piece parts. But, in a case of putting the space, it is preferable that the space is about more than a width of the compaction roller. With the structure, a working effect of the pressure-bond/transfer step enhances. Although it is not necessary to put the space between the piece parts, it should be careful that a downstream end of a leading piece part in its moving direction does not overlap an upstream end of the following piece part in its moving direction. If the downstream end of the leading piece part in its moving direction overlaps the upstream end of the following piece part in its moving direction, it may invite a possible inconvenience upon the pressure-bond/transfer step.

The base sheet 20, for example, is a film material having a size of about 50 m length × 1500 mm width × 0.1-0.5 mm thickness. The base sheet 20, for example, is a paper having been subjected to release processing on its both sides. Preferably, the base sheet 20 has an appropriate elasticity, and a tensile force thereof is controllable (will be mentioned below).

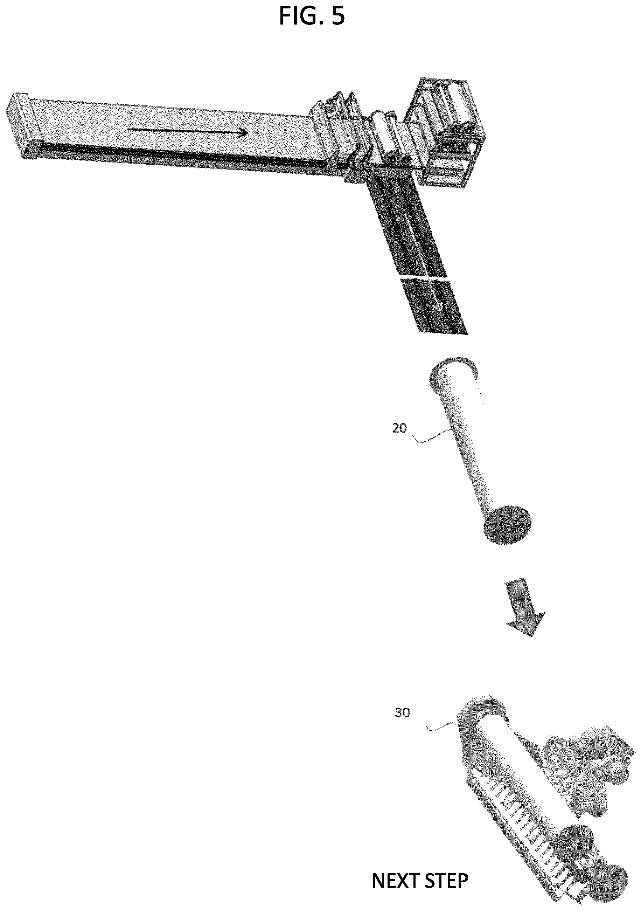

FIG. 5 is an image illustrating a roll form winding step. After a predetermined number of piece parts 10 are placed on the base sheet 20 or while the piece parts 10 are placed on the base sheet 20 one by one, the base sheet 20 is subjected to winding into a roll shape. The roll-like shaped base sheet 20 is stocked, as required, for the next step. Then, upon receiving an instruction from the next step, the roll-like shaped base sheet 20 is sent to the next production line.

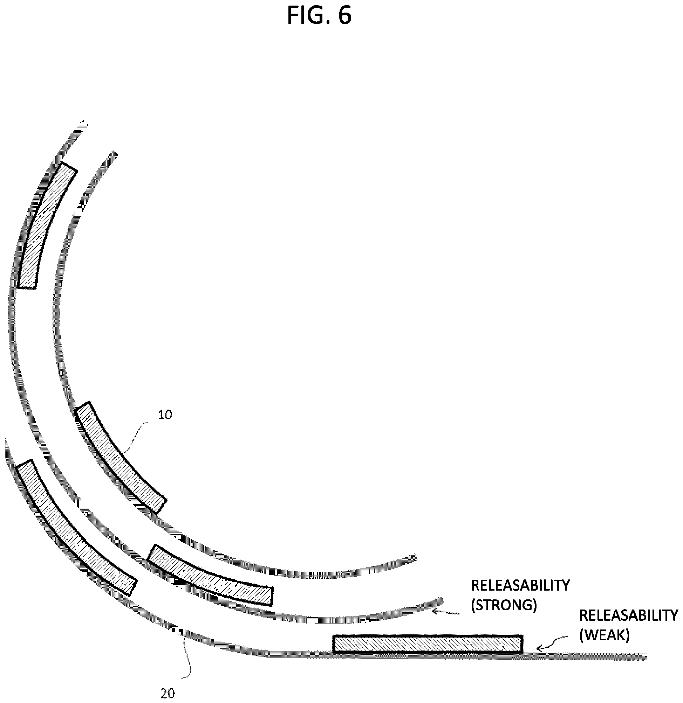

FIG. 6 is an image illustrating a cross-section of the roll-like shaped base sheet. The base sheet 20 is provided with release processing on its both surfaces. The front surface (a side where the piece parts 10 are placed) of the base sheet 20 has a weak releasability, and the back surface (a side where no piece parts 10 is placed) of the base sheet 20 has a strong releasability.

This eliminates a possible adhesion between the piece parts 10 and the back surface of the base sheet 20 upon formation of the roll-like shaped base sheet. Therefore, the expansion of the roll-like shaped base sheet upon the pressure-bond/transfer step can be smoothly performed. Further, this eliminates a possible displacement of the piece parts 10 which are placed on the front surface of the base sheet 20. Therefore, a positioning accuracy upon the pressure-bond/transfer step can be assured.

Hereinabove, studied was adhesion between the piece parts 10 and the back surface of the base sheet 20 upon formation of the roll-like shaped base sheet. In a case where a cover sheet is interposed between the piece parts 10 and the back surface of the base sheet 20, it is not necessary to study about the adhesion between the piece parts 10 and the back surface of the base sheet 20.

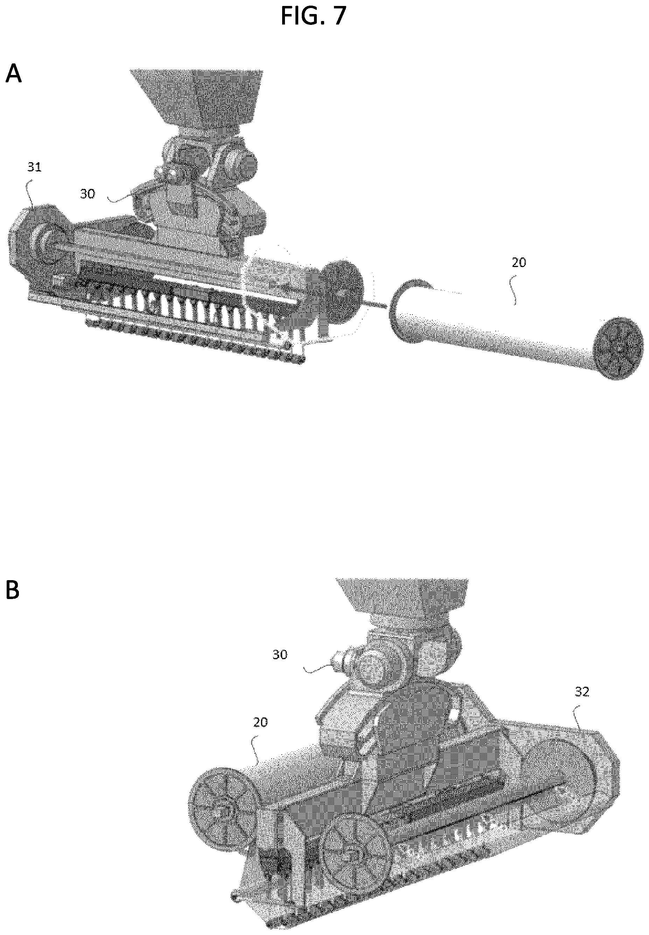

FIG. 7 is an image illustrating a roll-like shaped base sheet setting step. The roll-like shaped base sheet 20 is set to a lamination head 30 of a pressure-bond/transfer apparatus. The lamination head 30 includes a feeding reel 31, a winding reel 32, a compaction roller 33, and a tensile force adjusting mechanism 34.

FIG. 7A illustrates how to set the roll-like shaped base sheet 20 to the feeding reel 31. FIG. 7B illustrates how to set the end part of the roll-like shaped base sheet 20 to the winding reel 32.

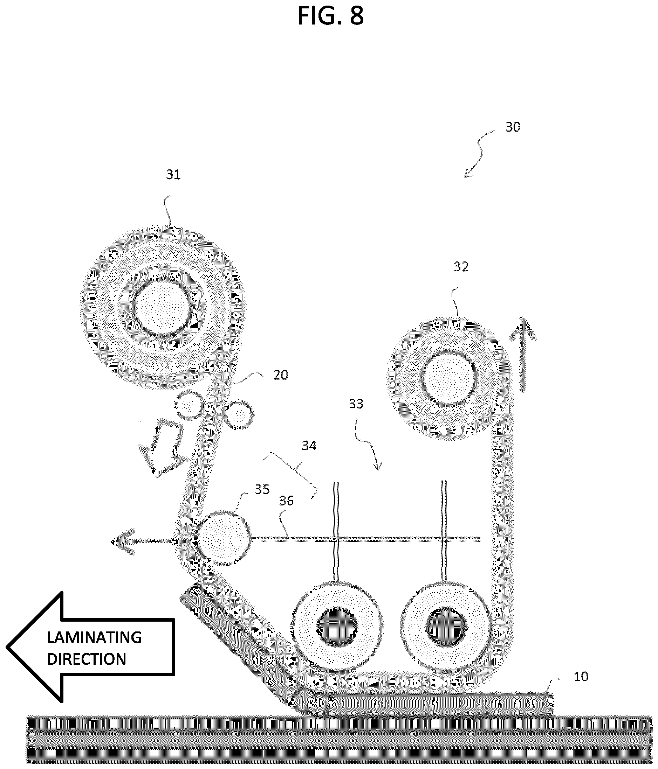

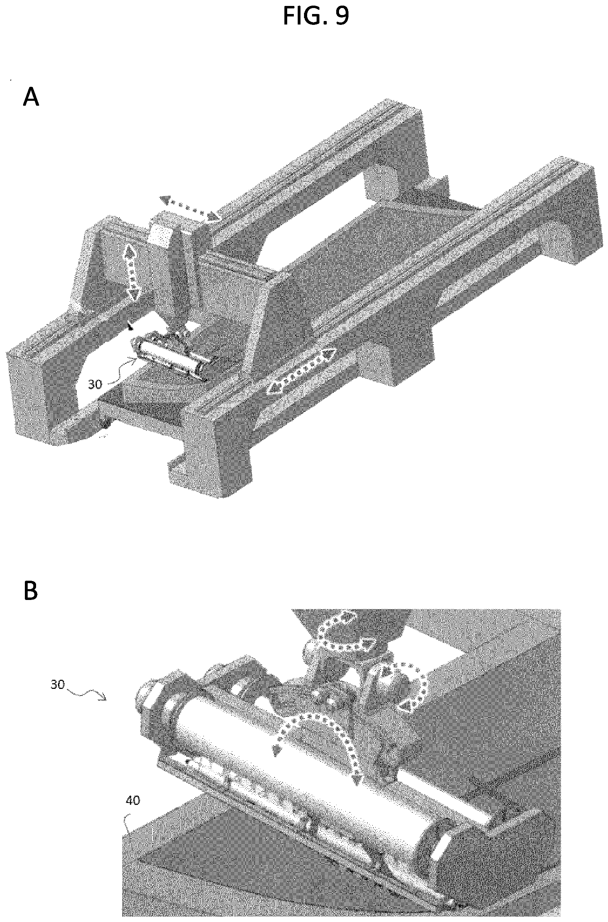

FIG. 8 and FIG. 9 are images illustrating the pressure-bond/transfer step. FIG. 9A illustrates a pressure-bond/transfer apparatus in its entirety, and FIG. 9B schematically illustrates the lamination head. The pressure-bond/transfer apparatus used in the pressure-bond/transfer step is an improvement of the lamination head of the lamination device used in the ATL method.

The lamination head 30 is supported by a gantry or a robot (not shown) and is movable in three-axes directions, i.e., a horizontal long axis direction, a horizontal short axis direction, and a vertical direction. This enables placing of the lamination head 30 to a targeted placement position on the jig 40. Further, the lamination head 30 is rotatable about the three axes. This enables adjustment of a posture of the lamination head 30 in such a manner that the lamination head 30 corresponds to the surface shape of the jig which has a complicated shape including a curved surface (e.g., three-dimensional curved surface). The surface shape of the jig almost corresponds to a shape of a targeted laminated body 50.

As described above, each of the piece parts 10 is placed on the belt-like shaped base sheet 20 in accordance with the order. The compaction roller 33 is positioned between the feeding reel 31 and the winding reel 32. In association with the operations of the feeding reel 31 and the winding reel 32, the compaction roller 33 performs the pressure-bonding operation and the transferring operation.

When the compaction roller 33 presses the base sheet 20 against the jig 40, the piece parts 10 are peeled off from the base sheet 20 to be transferred to the jig 40. At the time, heating may be performed, as required. For example, in a case where a thermoplastic resin is used or in a case where an adhesive force at normal temperature is low (in a case where an amount of resin is small), the heating is to be performed, as required. In a case where the adhesive force at normal temperature is high (in a case where an amount of resin is large), the heating is not necessary.

When the position adjustment and the posture adjustment of the lamination head 30, the feeding and the winding of the base sheet 20 by the feeding reel 31 and the winding reel 32, and the pressure-bonding operation and the transferring operation by the compaction roller 33 are performed inter-connectedly for one of the piece parts 10, the position adjustment and the posture adjustment of the lamination head 30, the feeding and the winding of the base sheet 20 by the feeding reel 31 and the winding reel 32, and the pressure-bonding operation and the transferring operation by the compaction roller 33 are performed inter-connectedly for the next one of the piece parts 10. The above-described operations are repeated for a plurality of times in accordance with the order (e.g., No. 1 → No. 2 →No. 3 → .... No. 9 → No. 10). Accordingly, a plurality of piece parts 10 is placed on a predetermined surface. A first layer is formed thereby.

To facilitate the understanding of the structure of the present invention, it is exemplified in the above description that the first layer is formed by a one roll-like shaped base sheet. Alternatively, the first layer may be formed by a part of the plurality of piece parts placed on the one roll-like shaped base sheet. Further alternatively, the first layer may be formed by a plurality of roll-like shaped base sheets.

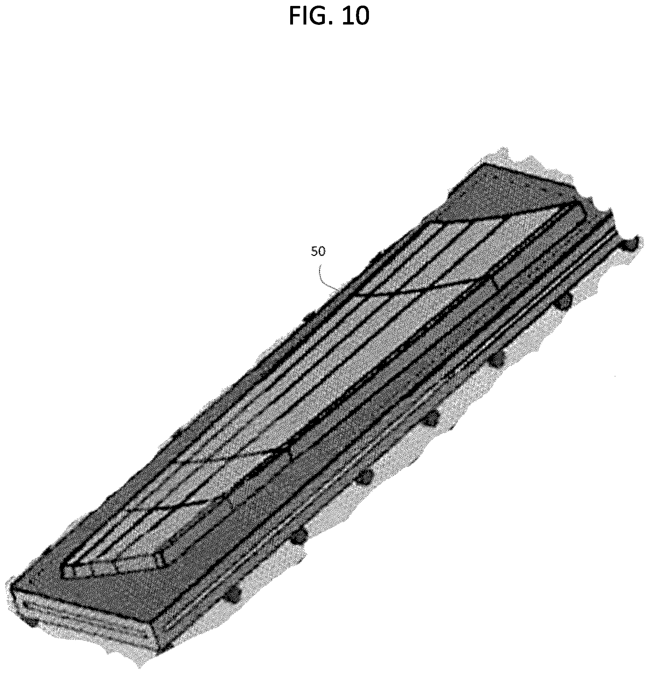

FIG. 10 is an image illustrating a laminated body 50. The first layer is provided with a second layer thereon, the lamination is repeated for a plurality of times to finally form the laminated body 50 composed of a plurality of layers. The laminated body 50 has a complicated shape including a curved surface.

### -Tensile Force Adjustment-

In the above-described structure, the feeding reel 31 and the winding reel 32 are controlled to make them keep a predetermined feeding speed and a predetermined winding tensile force.

Here, if the tensile force generated in the base sheet 20 is low, the base sheet 20 warps, resulting in inviting a possible cause of generation of displacement and/or wrinkles. On the other hand, if the tensile force generated in the base sheet 20 is high, the rigidity becomes too high, which prevents the base sheet 20 from fitting for the complicated shapes including a curved surface. Therefore, adjustment to an appropriate tensile force is material.

Further, the piece parts 10 placed on the belt-like shaped base sheet 20 includes piece parts having different shapes and/or different sizes. If the shapes and/or the sizes of the piece parts 10 vary, an optimum tensile force also varies. Therefore, adjustment to the appropriate tensile force is important.

In the woven prepreg material, it is difficult to specify a strength direction in comparison with the unidirectional prepreg material.

The lamination head 30 has a tensile force adjusting mechanism 34 (see, FIG. 8). The tensile force adjusting mechanism 34 has a roller 35 and an elastic part 36 connected to the roller 35. When the elastic part 36 stretches, the roller 35 pressurizes the back surface of the base sheet 20 to increase the tensile force generated in the base sheet 20. When the elastic part shrinks, the pressurizing force of the roller 35 against the back surface of the base sheet 20 decreases, and thus the tensile force generated in the base sheet 20 decreases. More specifically, a control of the stretchiness/shrinkage of the elastic part 36 achieves adjustment of the tensile force generated in the base sheet 20.

Alternatively, the tensile force adjustment may be performed by using a sensor (not shown) in such a manner that the tensile force generated in the base sheet 20 is measured by the sensor, and the tensile force is controlled so as to approach the optimum tensile force based on the measured value. Further alternatively, by monitoring a shape of the base sheet 20 using a camera, etc., the tensile force is adjusted in such a manner that the base sheet 20 can correspond to a shape of a curved surface, etc. Still further alternatively, an optimum stretchiness/shrinkage amount of the elastic part 36 may be preliminary set for each of the piece parts 10. With the structure, the tensile force of the base sheet 20 can be well adjusted for each of the piece parts 10.

As a result, the optimum tensile force can be kept for every one of the piece parts 10. Further, generation of displacement and/or wrinkles can be suppressed, and the piece parts 10 can be fit for any complicated shapes including a curved surface as well.

### -Summary of Effect Produced in Automatic Lamination-

The laminating work of the woven prepreg material can be automatized. As a result, a laminated body having a complicated shape including a curved surface (e.g., a three-dimensional curved surface) can be formed with ease.

As a result, the number of manual operations can be decreased, the manufacturing cost can be saved, the variation in product quality can be suppressed (no generation of wrinkles and a little size difference caused by displacement of the piece parts), and the working time can be reduced.

The automatization of the lamination step can realize the automatization of the FRP Forming System in its entirety.

### [REFERENCE CHARACTER LIST]

- 10: piece parts (woven prepreg material)
- 20: base sheet
- 30: lamination head
- 31: feeding reel
- 32: winding reel
- 33: compaction roller
- 34: tensile force adjusting mechanism
- 35: roll (tensile force adjustment)
- 36: elastic part
- 40: jig
- 50: laminated body (final product)

## Claims

1. A lamination method for laminating prepreg materials which are made by impregnating fibers with an uncured resin, the method comprising:
a step of deciding a lamination order for laminating a plurality of piece parts made of the prepreg material;
a step of cutting out the piece parts from a prepreg base material made of the prepreg material;
a step of placing the cut-out piece parts on a belt-like shaped base sheet in accordance with the order;
a step of winding the base sheet having the piece parts placed thereon into a roll-like shape;
a step of setting the roll-like shaped base sheet to a feeding reel and setting an end part of the roll-like shaped base sheet to a winding reel;
a step of feeding the base sheet from the feeding reel to wind the base sheet by the winding reel; and
a step of pressure-bonding the piece parts against a jig or a laminated body in accordance with the order by using a compaction roller to transfer the piece parts from the base sheet.

2. The lamination method according to Claim 1, wherein the compaction roller adjusts a tensile force of the base sheet for each of the piece parts when pressure-bonding the piece parts against the jig or the laminated body in accordance with the order.

3. The lamination method according to Claim 1 or Claim 2, wherein the fibers of the prepreg material have a woven fabric shape.

4. The lamination method according to any one of Claim 1 to Claim 3, wherein the plurality of piece parts includes piece parts having different sizes or/and different shapes.

5. The lamination method according to any one of Claim 1 to Claim 4, wherein the jig has a curved surface.

6. The lamination method according to any one of Claim 1 to Claim 5:
wherein the base sheet has a front surface having the piece parts placed thereon and a back surface which is a reverse side of the front surface; and
wherein the back surface has better releasability than the front surface.

7. A lamination device for laminating prepreg materials which are made by impregnating fibers with an uncured resin, the device comprising:
a feeding reel for feeding a roll-like shaped base sheet;
a winding reel for winding the fed base sheet; and
a compaction roller for pressure-bonding a plurality of piece parts, each being cut out from a prepreg base material and given an order to be placed on the base sheet in accordance with the order, against a jig or a laminated body to transfer the piece parts from the base sheet.

8. The lamination device according to Claim 7, further comprising:
a tensile force adjusting means for adjusting a tensile force of the base sheet for each of the piece parts by using the compaction roller when the piece parts are pressure-bonded against the jig or the laminated body in accordance with the order.
